# EUROPEAN PATENT SPECIFICATION

(11) **EP 2 075 217 B1**
(45) Date of publication and mention of the grant of the patent: **26.10.2011**
(21) Application number: 08021365.5
(22) Date of filing: 09.12.2008
(51) Int. Cl.: B66F 9/24, B60K 17/28

(54) **Industrial vehicle**
Industrielles Fahrzeug
Véhicule industriel

(30) Priority: 25.12.2007 JP 2007332167
(43) Date of publication of application: 01.07.2009
(73) Proprietor: Nissan Forklift Co., Ltd., Yokohama-shi Kanagawa 220-8686 (JP)
(72) Inventor: Hosotani, Takashi, Atsugi-shi Kanagawa 243-0123 (JP)
(74) Representative: Weber, Joachim

(56) References cited:
- JP-A- 2 197 424
- JP-A- 5 106 243
- JP-A- 8 142 704
- JP-A- 2000 177 410
- JP-A- 2000 211 397
- US-A1- 2003 193 238

## Description

### FIELD OF THE INVENTION

This invention relates to driving of an equipment-driving pump in an industrial vehicle such as a forklift truck.

### BACKGROUND OF THE INVENTION

An equipment-driving pump provided in an industrial vehicle such as a cargo-handling pump provided in a forklift truck is driven, for example, by an internal combustion engine that generates a motive force for running the industrial vehicle. The equipment-driving pump is maintained in an operative state as long as the internal combustion engine is operative. In a forklift truck, the cargo-handling pump that drives the forklift is connected, for example, to a pump impeller of a torque converter associated with an automatic transmission, via a reduction gear.

When a fixed capacity pump in which a discharge amount of working oil over a single pump revolution, or in other words a pump discharge capacity, is fixed is used as the cargo-handling pump to drive the forklift, a pump having a large discharge capacity is not preferable in terms of preventing the internal combustion engine from stalling. Specifically, when the forklift is operated while the internal combustion engine is running idle or when hydraulic pressure generated by the cargo-handling pump is used to drive a power steering device and the forklift together, a cargo-handling pump having a large discharge capacity may cause the internal combustion engine to stall.

On the other hand, the cargo-handling speed is limited by the pump discharge capacity and an output torque of the internal combustion engine. When the pump discharge capacity is small, the operation speed of the forklift cannot be increased when required.

In this context, JPHO1-136875 A, published by the Japan Patent Office in 1989, proposes application of a variable capacity pump to an equipment-driving pump.

Alternatively, JP2002-226198 A, published by the Japan Patent Office in 2002, and JPH07-285787 A, published by the Japan Patent Office in 1995, propose a pair of pump units connected in parallel to an internal combustion engine so as to enable operation of only one pump unit when the required discharge amount is small and operation of both pump units when the required discharge amount is large.
JP 8-142704A discloses an industrial vehicle having the features of the preamble of claim 1.

### SUMMARY OF THE INVENTION

When a variable capacity pump is used as a cargo-handling pump of a forklift truck, the relationship between an engine rotation speed and a pump discharge capacity can be controlled variably, and hence the aforesaid problem can be solved. However, a variable capacity pump has a complicated structure and is expensive compared with a fixed capacity pump. Further, a control device for controlling the discharge capacity of the pump is required. The implementation cost of the cargo-handling device associated with a variable capacity pump is therefore very expensive as a whole.

When a parallel pair of pump units is used, the pump discharge capacity can be switched between two values and thus the aforesaid problem may be solved. With this pump system, however, the pump discharge capacity cannot be varied in a stepless fashion to an optimum value depending on engine operation conditions from a low load region to a high load region, or from an idle rotation speed region to a high rotation speed region.

It is therefore an object of this invention to provide an industrial vehicle equipped with a low-cost pump that can vary the pump discharge capacity according to a workload or an engine rotation speed.

To achieve the above object, this invention provides an industrial vehicle comprising an internal combustion engine, a torque converter comprising a pump impeller connected to the internal combustion engine and a turbine runner, an automatic transmission connected to the turbine runner, a drive wheel connected to the automatic transmission, and an equipment-driving pump driven by a rotational torque of the turbine runner.

The details as well as other features and advantages of this invention are set forth in the remainder of the specification and are shown in the accompanying drawings.

### BRIEF DESCRIPTION OF THE DRAWINGS

FIG. 1 is a schematic diagram of a forklift-driving device provided in a forklift truck according to this invention.

FIG. 2 is a control circuit diagram of various clutches with which the forklift truck is provided.

FIG. 3 is a diagram showing a relationship between a cargo-handling load and a cargo-handling speed according to an accelerator opening realized by the forklift-driving device.

FIG. 4 is a diagram showing a relationship between a cargo-handling load and a cargo-handling speed according to an accelerator opening realized by a forklift-driving device according to the prior art.

FIG. 5 is a schematic diagram of a forklift-driving device provided in a forklift truck according to a second embodiment of this invention

FIG. 6 is a schematic diagram of a forklift driving device, a hydraulic power steering device, and a hydraulic brake-boosting device provided in a forklift truck according to a third embodiment of this invention.

FIG. 7 is a schematic diagram of a forklift driving device and a hydraulic power steering device provided in a forklift truck according to a fourth embodiment of this invention

### DESCRIPTION OF THE PREFERRED EMBODIMENTS

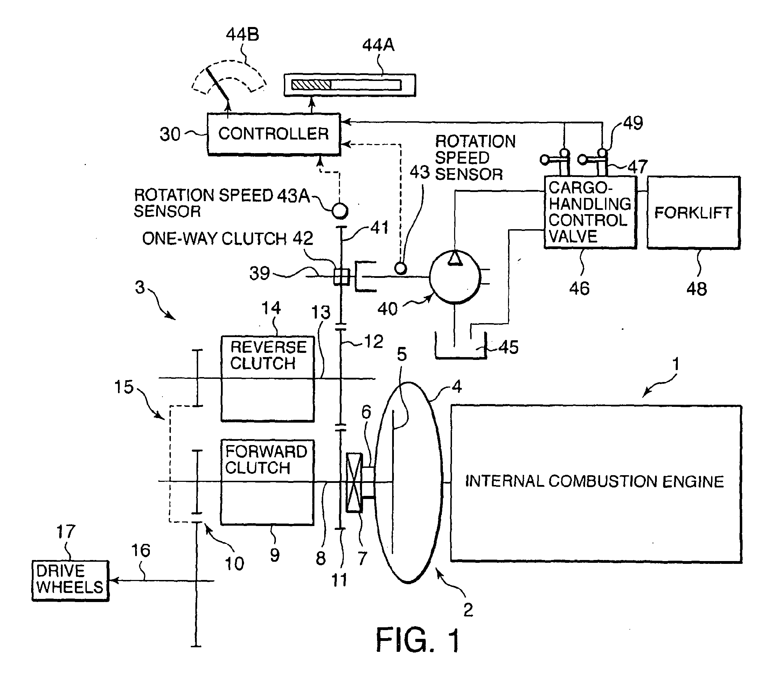

Referring to FIG. 1 of the drawings, an internal combustion engine 1 which provides a motive force for running a forklift truck outputs rotational torque to drive wheels 17 of the forklift truck via a torque converter 2, an automatic transmission 3 provided with a forward/reverse change-over mechanism, and a fixed gear ratio reduction gear.

The torque converter 2 has a known structure comprising a pump impeller 4 connected to a crankshaft of the internal combustion engine 1, a turbine runner 5 connected to an input shaft of the automatic transmission 3, a fixed hollow shaft fixed to a housing, and a stator supported by the fixed hollow shaft.

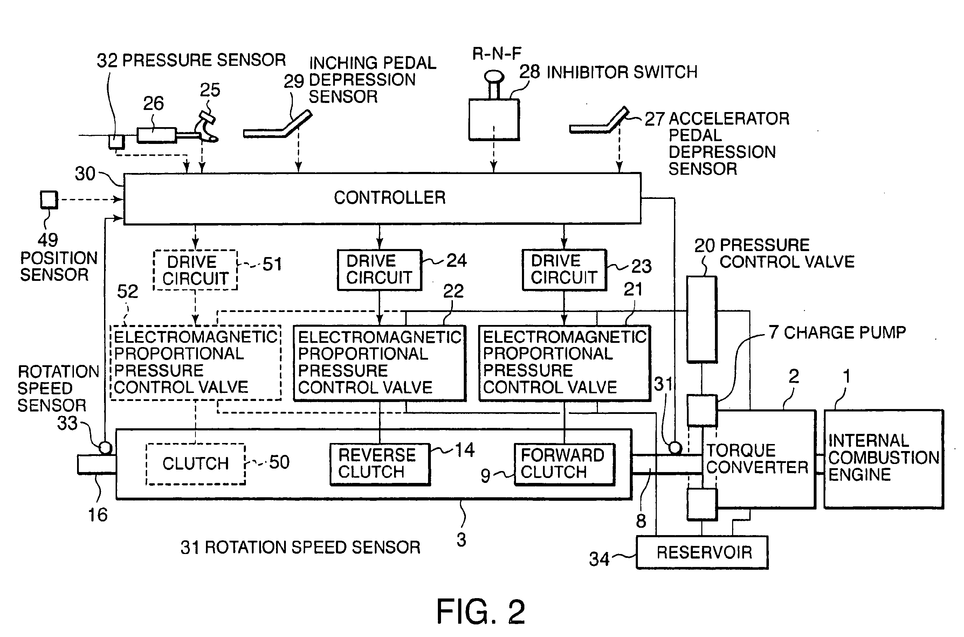

A charge pump 7 is connected to the pump impeller 4 via a hollow shaft 6 that is supported to be free to rotate on the outer periphery of the fixed hollow shaft. The charge pump 7 operates synchronously with the internal combustion engine 1 to supply hydraulic pressure to electromagnetic proportional pressure control valves 21 and 22 shown in FIG. 2, with which the automatic transmission 3 is provided, as well as to circulate working oil within the torque converter 2.

The automatic transmission 3 comprises one forward gear 10 activated by a forward clutch 9 and one reverse gear 15 activated by a reverse clutch 14. When the forward gear 10 is selected, the forward clutch 9 is engaged such that the automatic transmission 3 transmits a rotation of a turbine shaft 8 connected to the turbine runner 5 of the torque converter 2 to the forward gear 10a. When the reverse gear 15 is selected, the reverse clutch 14 is engaged, whereby the automatic transmission 3 transmits a rotation of the turbine shaft 8 to a reverse input shaft 13 via a drive gear 11 fixed to the turbine shaft 8 and a driven gear 12 meshed with the drive gear 11. By engaging the reverse clutch 14, the rotation of the reverse input shaft 13 is transmitted to the reverse gear 15 via the reverse clutch 14. The forward clutch 9 and the reverse clutch 14 are controlled such that only one of them can be engaged and an output torque of either the forward clutch 9 or the reverse clutch 14 under engagement is transmitted to an output shaft 16 of the automatic transmission 3 via the forward gear 10 or the reverse gear 15. The rotation of the output shaft 16 is then transmitted to the drive wheels 17 of the forklift truck.

The gears of the automatic transmission 3 are not limited to those described above. The automatic transmission 3 may comprise, for example, two forward gears and one reverse gear, or two forward gears and two reverse gears. The structure of the automatic transmission 3 is also not limited to that described above.

Referring to FIG. 2, a gear shifting mechanism of the automatic transmission 3 will be described.

Oil pressurized by the charge pump 7 is supplied to the electromagnetic proportional pressure control valves 21 and 22 after being subjected to pressure regulation to a constant pressure in a pressure regulator 20. The electromagnetic proportional pressure control valve 21 controls a supplied pressure to a clutch engaging pressure corresponding to a command signal output from a controller 30 via a drive circuit 23 and supplies the clutch engaging pressure to the forward clutch 9. The electromagnetic proportional pressure control valve 22 controls a supplied pressure to a clutch engaging pressure corresponding to a command signal output from the controller 30 via a drive circuit 24 and supplies the clutch engaging pressure to the reverse clutch 14.

Surplus working oil in the pressure regulator 20 is supplied to the torque converter 2 and then supplied from the torque converter 2 to the automatic transmission 3 via an oil cooler. In the automatic transmission 3, the working oil lubricates and cools the forward clutch 9 and the reverse clutch 14 and is finally collected into a reservoir 34.

Each of the forward clutch 9 and the reverse clutch 14 comprises a clutch cylinder which is activated according to a supplied hydraulic pressure, and a pair of multiple clutch discs at a drive side and a driven side which engage with each other according to activation of the clutch cylinder. The forward clutch 9 transmits a rotational torque to the output shaft 16 in a direction corresponding to forward driving of the forklift truck. The reverse clutch 14 transmits a rotational torque to the output shaft 16 in a direction corresponding to reverse driving of the forklift truck.

The forward clutch 9 and the reverse clutch 14 vary a frictional torque transmission amount between the pair of multiple clutch discs according to a hydraulic pressure supplied from the electromagnetic proportional pressure control valves 21 and 22, respectively. When the supplied hydraulic pressure is low, the frictional torque transmission amount between the pair of multiple clutch discs is small, but as the supplied hydraulic pressure increases, the frictional torque transmission amount between the pair of multiple clutch discs also increases.

The electromagnetic proportional pressure control valve 21 is constituted by a solenoid valve and varies the hydraulic pressure supplied to the forward clutch 9 according to an exciting current supplied to a solenoid from the drive circuit 23 in response to a command signal output from the controller 30. The electromagnetic proportional pressure control valve 22 is constituted by a solenoid valve and varies the hydraulic pressure supplied to the reverse clutch 14 according to an exciting current supplied to a solenoid from the drive circuit 24 in response to a command signal output from the controller 30.

The electromagnetic proportional pressure control valves 21 and 22 may be constituted by valves which operate in response to the exciting current of the solenoid, or pulse width modulation (PWM) valves which operate in response to a pulse width or a duty ratio of the exciting current of the solenoid. The frictional torque transmission amount of the forward clutch 9 and that of the reverse clutch 14 are zero when they are not provided with hydraulic pressure. Braking of the drive wheels 17 of the forklift truck is activated by a braking pressure generated by a master cylinder 26 which operates in response to depression of a brake pedal 25 by an operator of the forklift truck.

Detection data are input into the controller 30 via signal circuits from an accelerator pedal depression sensor 27 which detects a depression amount of an accelerator pedal with which the forklift truck is provided, an inhibitor switch 28 which detects a current position of a selector lever which switches between forward driving and reverse driving of the forklift truck and outputs a signal corresponding to any of Forward (F), Reverse (R), and Neutral (N), an inching pedal depression sensor 29 which detects a depression amount of an inching pedal with which the forklift truck is provided, and a pressure sensor 32 which detects a braking pressure generated by the master cylinder 26 in accordance with depression of the brake pedal 25. Instead of providing the pressure sensor 32 which detects the braking pressure, it is possible to provide a brake pedal depression sensor which detects a depression amount of the brake pedal 25.

The inching pedal, when depressed, reduces the engaging pressure of the forward clutch 9 or the reverse clutch 14 under engagement, and when depressed further, depresses the brake pedal 25 together therewith. When the inching pedal is depressed deeply, therefore, the brake pressure rises as the clutch pressure lowers.

Further detection data are input into the controller 30 via signal circuits from a position sensor 49 which detects if a cargo-handling control lever 47 that is operated by the operator is in a cargo-handling position, a rotation speed sensor 31 which detects a rotation speed of the turbine shaft 8, and a rotation speed sensor 33 which detects a rotation speed of the output shaft 16.

The controller 30 outputs command signals corresponding to the engaging pressures of the forward clutch 9 and the reverse clutch 14 to drive the circuits 23 and 24, respectively.

Specifically, when the selector lever operated by the operator designates forward driving, the controller 30 supplies an exciting current to the electromagnetic proportional pressure control valve 21 via the drive circuit 23, thereby supplying the forward clutch 9 with hydraulic pressure such that the forward clutch 9 engages. When selector lever operated by the operator designates reverse driving, the controller 30 supplies an exciting current to the electromagnetic proportional pressure control valve 22 via the drive circuit 24, thereby supplying the reverse clutch 14 with hydraulic pressure such that the reverse clutch 14 engages.

The controller 30 is constituted by a microcomputer comprising a central processing unit (CPU), a read-only memory (ROM), a random access memory (RAM), and an input/output interface (I/O interface). The controller 30 may be constituted by a plurality of microcomputers.

Referring again to FIG. 1, the forklift truck comprises a cargo-handling pump 40 as an equipment-driving pump to drive a forklift 48 using hydraulic pressure. A forklift-driving device according to this invention drives the cargo-handling pump 40 using a rotational torque of the turbine shaft 8 connected to the turbine runner 5 of the torque converter 2. For this purpose, a pump-driving gear 41 meshed with the driven gear 12 of the automatic transmission 3 is provided to drive the cargo-handling pump 40. The cargo-handling pump 40 is therefore not directly driven by the internal combustion engine 1 but by the turbine runner 5 of the torque converter 2. The cargo-handling pump 40 suctions working oil from a working oil tank 45 and supplies the cargo-handling control valve 46 with pressurized working oil.

The cargo-handling control valve 46 supplies the pressurized working oil to the forklift 48 in response to an operation of the cargo-handling control lever 47 by the operator and causes the forklift 48 to perform cargo-handling. When the cargo-handling control lever 47 is not operated, the cargo-handling control valve 46 recirculates the pressurized working oil discharged by the cargo-handling pump 40 to the working oil tank 45.

The pump-driving gear 41 and the cargo-handling pump 40 are connected via a one-way clutch 42. To prevent the cargo-handling pump 40 from rotating in an opposite direction, the one-way clutch 42 transmits rotational torque of the pump-driving gear 41 in a specified direction from the pump-driving gear 41 to the cargo-handling pump 40 while preventing rotational torque from being transmitted in the opposite direction from the pump-driving gear 41 to the cargo-handling pump 40. The turbine runner 5 normally rotates in the same direction as the pump impeller 4. In this case, the pump-driving gear 41 rotates in the specified direction.

When rotational torque is input into the turbine runner 5 in the opposite direction from the drive wheels 17, the turbine runner 5 may rotate in the opposite direction with respect to the rotation of the pump impeller 4. In this case, the pump-driving gear 41 rotates in the opposite direction to the specified direction. In terms of space saving, the one-way clutch 42 is preferably disposed between the pump-driving gear 41 and a pump-driving shaft 39 which supports the pump-driving gear 41.

The forklift-driving device further comprises a liquid crystal display 44A which indicates a cargo-handling speed on a bar graph. The cargo-handling speed is a rotation speed of the cargo-handling pump 40, which is obtained by converting the rotation speed of the turbine shaft 8 detected by the rotation speed sensor 31 using a gear ratio of the pump-driving gear 41 with respect to the drive gear 11. Since the cargo-handling speed does not necessarily correspond to the rotation speed of the internal combustion engine 1 in this forklift driving device, the rotation speed of the cargo-handling pump 40, which represents the cargo-handling speed, is indicated on the liquid crystal display 44A such that the operator of the forklift truck can recognize the cargo-handling speed directly.

Instead of calculating the rotation speed of the cargo-handling pump 40 from the rotation speed of the turbine shaft 8, a rotation speed sensor 43 as shown in FIG. 2 may be provided to detect the rotation speed of the cargo-handling pump 40 directly. Alternatively, the rotation speed of the pump-driving gear 41 may be detected by a rotation speed sensor 43A as a value equivalent to the rotation speed of the cargo-handling pump 40.

The liquid crystal display 44A may be replaced by an analog meter 44B shown by a broken line in the figure. An analog-style display is preferable in terms of intuitive recognition of the cargo-handling speed.

In this forklift driving device, when a cargo-handling load of the cargo-handling pump 40 is small, a pump driving load or a pump discharge pressure is also low, and accordingly, the slip ratio or stall ratio between the pump impeller 4 and the turbine runner 5 of the torque converter 2 is small. In this situation, the cargo-handling pump 40 rotates at a high rotation speed corresponding to the rotation speed of the internal combustion engine 1.

As the cargo-handling load of the cargo-handling pump 40 increases, the driving load of the cargo-handling pump 40 also increases. Accordingly, the rotation speed and the pump discharge flow rate of the cargo-handling pump 40 decreases. As a result, a slip rate between the pump impeller 4 and the turbine runner 5 of the torque converter 2 increases. The stall torque which increases together with the slip rate promotes an increase in the driving torque of the cargo-handling pump 40 so as to raise the discharge pressure of the cargo-handling pump 40. As a result, the pump discharge flow rate varies depending on the cargo-handling load. Herein, the cargo-handling load corresponds to the pump discharge pressure, and the pump discharge flow rate corresponds to the pump rotation speed and the cargo-handling speed.

In a prior art forklift-driving device in which the cargo-handling pump is connected to the pump impeller of the torque converter, the cargo-handling pump is rotated at a fixed ratio relative to the engine rotation speed. The discharge flow rate or the pump rotation speed of the cargo-handling pump varies in a fixed relation to the rotation speed of the internal combustion engine while its maximum pump discharge pressure depends on a maximum output torque of the internal combustion engine 1 which drives the cargo-handling pump.

The maximum output torque of the internal combustion engine 1 is smallest when the internal combustion engine is running idle, increases as the rotation speed of the engine increases, reaches a maximum at a predetermined rotation speed, and thereafter decreases as the rotation speed increases further. In short, an input torque into the cargo-handling pump 40 varies in response to the rotation speed of the internal combustion engine.

Accordingly, when the internal combustion engine is running idle or at a low rotation speed and a cargo-handling operation is started under a high cargo-handling load, the rotation speed of the internal combustion engine decreases and stalling may occur in the internal combustion engine. To obtain a pump discharge pressure that meets the cargo-handling load, it is necessary to input a corresponding driving torque into the cargo-handling pump. For this purpose, the operator must depress the accelerator pedal so as to increase the output torque of the internal combustion engine because the rotation speed of the internal combustion engine must be increased to increase the output torque thereof.

In general, a reduction gear is provided between the internal combustion engine and the cargo-handling pump. When the accelerator pedal is depressed to a predetermined extent, the cargo-handling pump generates a pump discharge pressure which meets the cargo-handling operation load. The cargo-handling speed of the cargo-handling device is limited by a cargo-handling control valve which limits the flow rate of working oil supplied from the cargo-handling pump to the forklift.

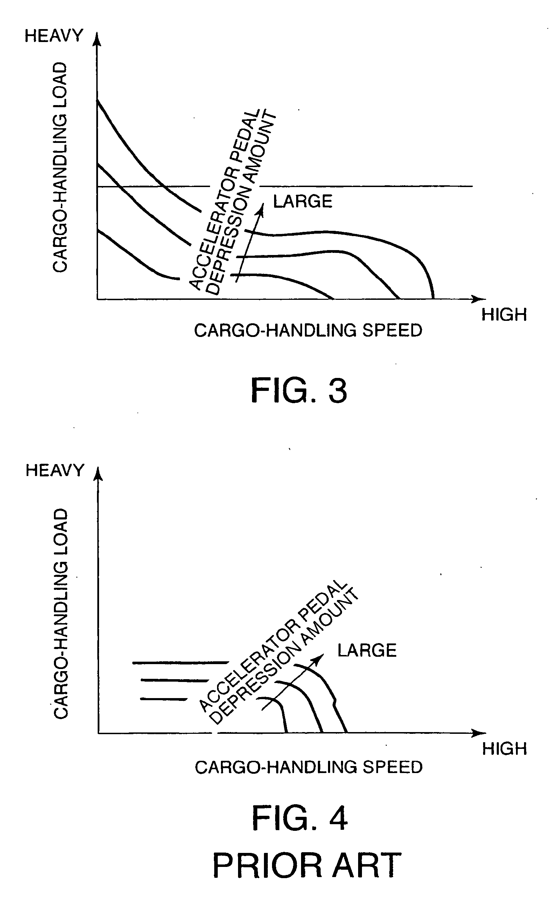

Referring to FIG. 4, in the prior art forklift driving device described above, the lifting force or in other words the cargo-handling load increases as the depression amount of the accelerator pedal increases while on the other hand the cargo-handling speed is limited by the cargo-handling control valve.

The cargo-handling control valve in the prior art forklift driving device recirculates a surplus amount of the working oil discharged by the cargo-handling pump at a greater flow rate than a fixed flow rate to the working oil tank. Thus, energy efficiency of this forklift-driving device is low and the temperature of the working oil rises to a high degree. The working oil tank is required therefore to have a large capacity to promote heat radiation of recirculated working oil. Even when the recirculated working oil is cooled in a working oil cooler, a working oil cooler of large capacity is required.

In the forklift-driving device according to this invention, in which the cargo-handling pump 40 is connected to the turbine runner 5 of the torque converter 2, the pump discharge flow rate varies according to the cargo-handling load.

Referring to Fig. 3, in the forklift-driving device according to this invention, the cargo-handling load and the pump discharge flow rate are inversely proportional irrespective of the accelerator pedal depression amount. That is to say, the cargo-handling speed is relatively low in a heavy load and increases as the load decreases. The cargo-handling load can be adjusted in accordance with depression amount of the accelerator pedal. This is an ideal characteristic for a cargo-handling device.

For example, even when the internal combustion engine 1 is running idle, a large driving torque can be exerted on the cargo-handling pump 40 by utilizing a torque increasing function of the torque converter 2. As a result, the cargo-handling operation while the internal combustion engine 1 is running idle is ensured without risking stalling of the internal combustion engine 1. Although the cargo-handling speed is low in this state, a comfortable operation feeling is realized.

Since the discharge pressure of the cargo-handling pump 40 can be increased owing to the torque increasing function of the torque converter 2, in comparison with the prior art forklift driving device, in which the cargo-handling pump is connected to the pump impeller, the size of a hydraulic cylinder used for driving the forklift 48 can be decreased with respect to an identical load. In other words, the forklift 48 can handle a heavier cargo using a hydraulic cylinder of an identical size to that used in the prior art forklift-driving device.

Further, the occasions on which the cargo-handling control valve 46 limits a supply flow rate of working oil to the forklift 48 decrease in comparison with the prior art forklift driving device. The temperature rise in the working oil is small and the capacity of the working oil tank 45 can be reduced. A working oil cooler is therefore not necessary. Even when provided, a working oil cooler of a small size can cool the working oil sufficiently.

A cargo-handling operation of a forklift truck is generally performed in an inching state where the inching pedal is depressed, or in a stationary state where the automatic transmission 3 is in the Neutral position and a parking brake is activated.

In the prior art forklift driving device, in which the cargo-handling pump is connected to the pump impeller, when a cargo-handling operation is performed in a state where the automatic transmission 3 is in the forward gear or the reverse gear, and the brake pedal 25 is depressed to stop running of the forklift truck, the rotational torque of the internal combustion engine is input into the pump impeller while the torque converter is in a stalled state. If the accelerator pedal is depressed in this state, since the rotation speed of the pump impeller increases while the turbine runner is stationary, the torque converter generates a large amount of heat and is therefore subject to failure.

In the forklift-driving device according to this invention, since the cargo-handling pump 40 is connected to the turbine runner 5, the cargo-handling pump 40 is not operated when the above operation is performed, and hence the operator realizes the operation mistake easily.

The forklift truck switches between the forward gear and the reverse gear frequently to perform a cargo-handling operation. If a switch from the forward gear to the reverse gear is performed to change the direction of travel without adequately decreasing the forward running speed of the forklift truck, the forward/reverse change-over mechanism changes over from forward running to reverse running while the forklift truck is still traveling forward. As a result, the turbine runner 5 of the torque converter 2 is forced to rotate in an opposite direction to the rotation direction of the pump impeller 4.

In the forklift-driving device according to this invention, the pump-driving gear 41 and the cargo-handling pump 40 are connected via the one-way clutch 42. Accordingly, even when the turbine runner 5 rotates in the opposite direction to the rotation direction of the pump impeller 4, the cargo-handling pump 40 does not rotate in a direction other than the normal direction. The cargo-handling pump 40 therefore does not suffer a negative pressure due to rotation of the cargo-handling pump 40 in a reverse direction, and the forklift 48 is protected from the adverse effects of the negative pressure in the cargo-handling pump 40.

Instead of providing a one-way clutch 42, a simple engaging/ disengaging clutch may be provided between the pump-driving gear 41 and the cargo-handling pump 40 as well as a sensor which detects a rotation direction of the turbine runner 5. The controller 30 keeps the clutch in the engaged state as long as the turbine runner 5 is rotating in the normal direction, and disengages the clutch when the turbine runner 5 starts to rotate in the reverse direction. Using the one-way clutch 42 is however more economical and installation thereof is also easy in comparison with the engaging/ disengaging clutch.

In the forklift-driving device according to this invention, unlike the cargo-handling pump 40, the charge pump 7 which generates a hydraulic pressure required for the operation of the automatic transmission 3 is connected to the pump impeller 4. The charge pump 7 therefore rotates in a fixed relation with the internal combustion engine 1. This is a general structure of a charge pump for an automatic transmission. This invention is therefore implemented without affecting the driving mechanism of the charge pump.

In the forklift driving device according to this invention, the pump-driving gear 41 meshes with the driven gear 12 of the automatic transmission 3 to drive the cargo-handling pump 40 using the turbine runner 5. An idler gear is generally required to extract rotation from a part between the torque converter 2 and the automatic transmission 3, but by using the pump-driving gear 41 meshed with the driven gear 12, the cargo-handling pump 40 can be driven under a simple construction without an idler gear.

In the forklift-driving device according to this invention, the cargo-handling speed does not directly correspond to the rotation speed of the internal combustion engine 1. However, the rotation speed of the cargo-handling pump 40 is indicated on the bar graph of the liquid crystal display 44A or on the analog meter 44B mounted on this forklift truck, and the operator can thereby grasp the cargo-handling speed directly. When the operator attempts to handle cargo in a state where the automatic transmission 3 applies the forward-gear 10 or the reverse gear 15 and the brake pedal 25 is depressed to prevent the forklift truck from running, the rotation speed of the cargo-handling pump 40 indicated on the liquid crystal display 44A or the analog meter 44B does not show an increase. The operator thereby recognizes the operation mistake easily.

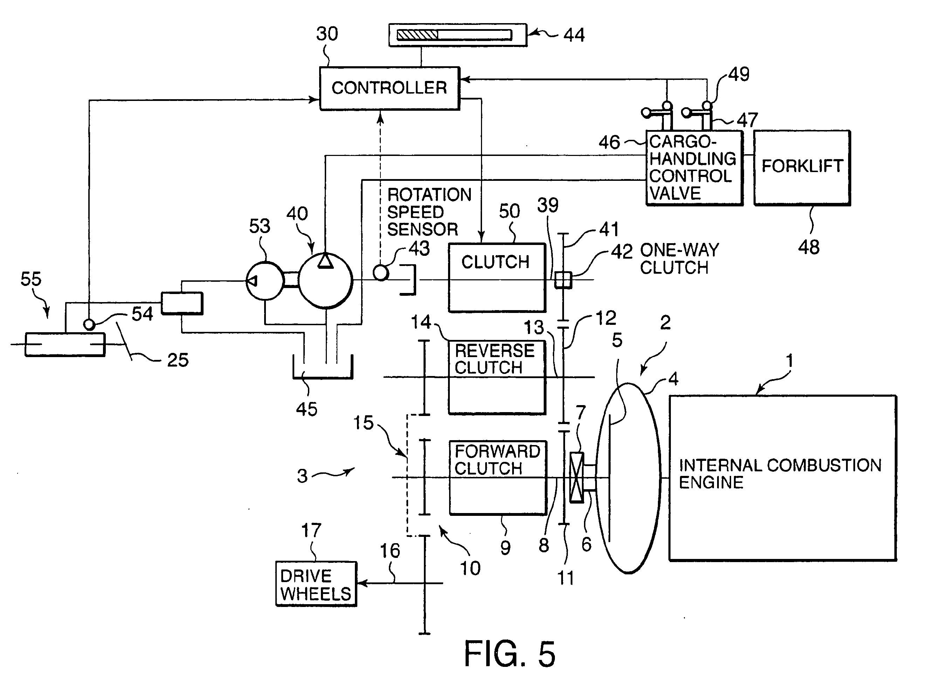

Referring to FIG. 5, a second embodiment of this invention will be described.

In a forklift-driving device according to the second embodiment, a clutch 50 is provided between the pump-driving shaft 39 and the cargo-handling pump 40. The pump-driving shaft 39 is connected to the pump-driving gear 41 via the one-way clutch 42 as in the case of the first embodiment.

The controller 30 is programmed to determine the position of the cargo-handling control lever 47 on the basis of the position signal input from the position sensor 49, and when the cargo-handling control lever 47 is in the cargo-handling position, to engage the clutch 50 such that the cargo-handling pump 40 is driven by the pump-driving gear 41 to supply the forklift 48 with pressurized working oil. When the cargo-handling control lever 47 is not in the cargo-handling position, on the other hand, the controller 30 releases the clutch 50 to stop the operation of the cargo-handling pump 40 and stop the supply of pressurized working oil to the forklift 48.

Referring again to FIG. 2, the clutch 50 is controlled via a drive circuit 51 which generates an electric control current in accordance with a command signal output from the controller 30 and an electromagnetic proportional pressure control valve 52 which controls an engaging pressure of the clutch 50 in response to the electric control current output from the drive circuit 51.

Referring again to FIG. 5, the forklift driving device further comprises a booster pump 53 attached to the cargo-handling pump 40 to supply the hydraulic brake-boosting device 55 or the like with hydraulic pressure, and a brake pedal switch 54 which detects depression of the brake pedal 25 and inputs a braking signal into the controller 30 via a signal circuit.

The time period during which the forklift 48 is driven corresponds to a part of a time period during which the forklift truck is operative. In the forklift truck according to the first embodiment, the cargo-handling pump 40 always discharges pressurized working oil as long as the turbine runner 5 is rotating. During a period in which the forklift 48 is not operated while the forklift truck is operative, the whole amount of the pressurized working oil discharged from the cargo-handling pump 40 is recirculated to the storage tank 45. In this embodiment, however, the controller 30 releases the clutch 50 so as to stop the operation of the cargo-handling pump 40 when the cargo-handling control lever 47 is not in the cargo-handling position.

The controller 30, having determined that the brake pedal 25 is depressed on the basis of the braking signal input from the brake pedal switch 54, engages the clutch 50 to activate torque transmission to the cargo-handling pump 40 and the booster pump 53 such that the booster pump 53 supplies the hydraulic brake-boosting device 55 with pressurized working oil required for braking. In general, a time period during which braking is applied is also limited to a part of a time period during which the forklift truck is operative.

The other components of the forklift-driving device are identical to those of the first embodiment.

According to this embodiment, the following effects are obtained in addition to those of the first embodiment.

Specifically, since the cargo-handling pump 40 and the booster pump 53 are operated only when either of them are required to be operative, the energy consumption of the pumps 40 and 53 can be suppressed and temperature increases in the pressurized working oil discharged from the pumps 40 and 53 are further prevented.

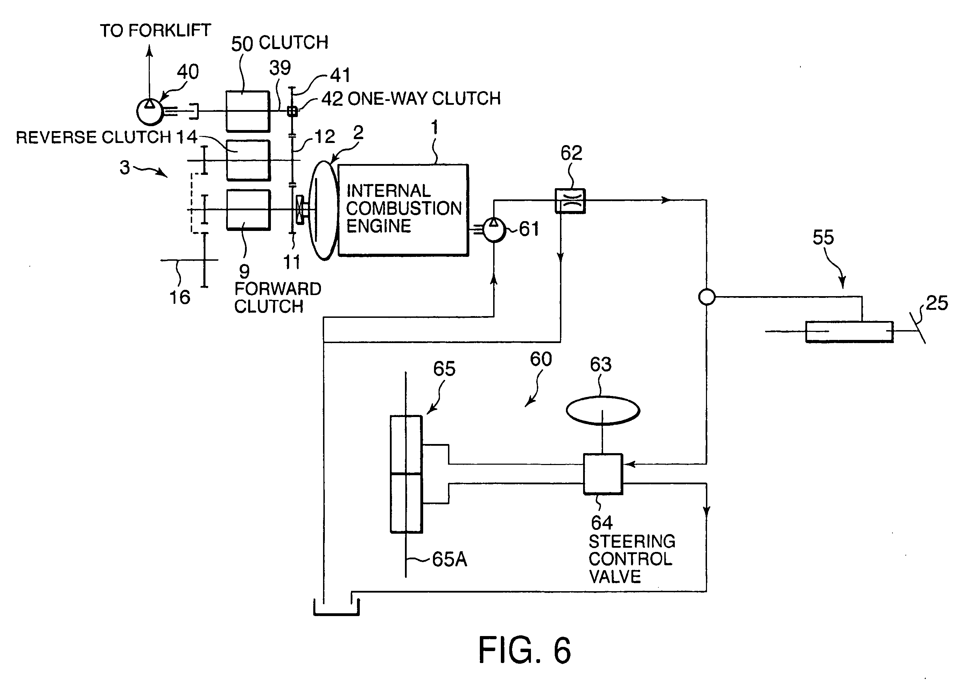

Referring to FIG. 6, a third embodiment of this invention will be described.

A forklift truck according to this embodiment comprises a forklift driving device and a hydraulic power steering device 60 which is independent of the forklift-driving device. The forklift-driving device corresponds to the forklift-driving device according to the second embodiment from which the hydraulic brake-boosting device 55 and the booster pump 53 are removed.

The hydraulic power steering device 60 is a full hydraulic power steering device comprising a hydraulic pump 61 directly driven by the internal combustion engine 1, and a double-rod type steering cylinder 65 which operates using pressurized working oil discharged from the hydraulic pump 61. The pressurized working oil discharged from the hydraulic pump 61 is also used for driving the hydraulic brake-boosting device 55.

The pressurized working oil discharged from the hydraulic pump 61 is supplied to the steering cylinder 65 via a steering control valve 64. The steering control valve 64 comprises a metering device known as an orbit pump which rotates in response to an operation of a steering wheel 63 by the operator, and a change-over valve which selectively supplies either of the two oil chambers in the steering cylinder 65 with the pressurized working oil discharged from the hydraulic pump 61 in accordance with a steering direction of the steering wheel 63.

The orbit pump regulates a flow rate of the pressurized working oil supplied to the steering cylinder 65 from the hydraulic pump 61 to a flow rate corresponding to the steering speed of the steering wheel 63. The steering cylinder 65 drives a piston rod 65A in an axial direction depending on the working oil supply direction so as to steer the steered wheels of the forklift truck to the right or left via a knuckle arm.

A hydraulic brake-boosting device 55 is connected to a hydraulic pressure supply passage which supplies the pressurized working oil discharged from the hydraulic pump 61 to the steering control valve 64. In other words, the hydraulic power steering device 60 and the hydraulic brake-boosting device 55 are driven together by the oil discharged from the hydraulic pump 61.

A flow control valve 62 is installed in the hydraulic pressure supply passage between the hydraulic pump 61 and the hydraulic brake-boosting device 55. The flow control valve 62 has a function to maintain the flow rate of the pressurized working oil supplied to the hydraulic power steering device 60 and the hydraulic brake-boosting device 55 from the hydraulic pump 61 at a constant level, irrespective of the rotation speed of the internal combustion engine 1.

The hydraulic power steering device 60 should not be limited to the above constitution. As in the case of a passenger vehicle, a hydraulic power steering device provided with a feedback control system can also be applied. In this feedback control system, a steered amount of the steered wheels is detected, and the oil discharged from the hydraulic pump 61 is supplied to either of the two oil chambers in the steering cylinder 65 depending on the result of a comparison between the steered amount of the steered wheels and the steering amount of the steering wheel 63.

In the forklift truck according to this embodiment, the cargo-handling pump 40 and the hydraulic pump 61 for the hydraulic power steering device 60 are separated as described above. When the forklift truck is running, the operation frequency of the forklift 48 is relatively low. In this state, the output torque of the internal combustion engine 1 is used to supply a motive force for running the forklift truck via the forward clutch 9 or the reverse clutch 14 and a driving force of the hydraulic pump 61 for operating the hydraulic power steering device 60. During inching running in which the inching pedal is depressed or in a stationary state where a parking brake is applied while the automatic transmission 3 is kept in the Neutral position, the operation frequency of the forklift 48 is relatively high. In this state, the forklift truck functions as follows.

Specifically, when the cargo-handling control lever 47 is not in the cargo-handling position, the controller 30 releases the clutch 50 so as to stop the operation of the cargo-handling pump 40 and suppress energy consumption by the internal combustion engine 1. When the cargo-handling control lever 47 is in the cargo-handling position, the controller 30 engages the clutch 50 to drive the cargo-handling pump 40 such that the output torque of the internal combustion engine 1 is used exclusively for the cargo-handling operation.

According to this embodiment, the following effects are obtained in addition to those of the first embodiment.

Since the forklift truck according to this embodiment drives the cargo-handling pump 40 only when it is required to be operative, the energy consumption of the cargo-handling pump 40 can be suppressed and temperature increases in the pressurized working oil discharged from the cargo-handling pump 40 are further prevented.

Further, since the cargo-handling pump 40 and the hydraulic pump 61 are used for different objects, the capacity of each pump is set to an optimum value for achieving the object. When discharged oil from a single pump is used for cargo-handling and power steering together, a large capacity pump is required to be operated normally. By selectively driving two pumps, each of which has an optimum capacity to achieve each object, energy loss in driving the pumps can be minimized.

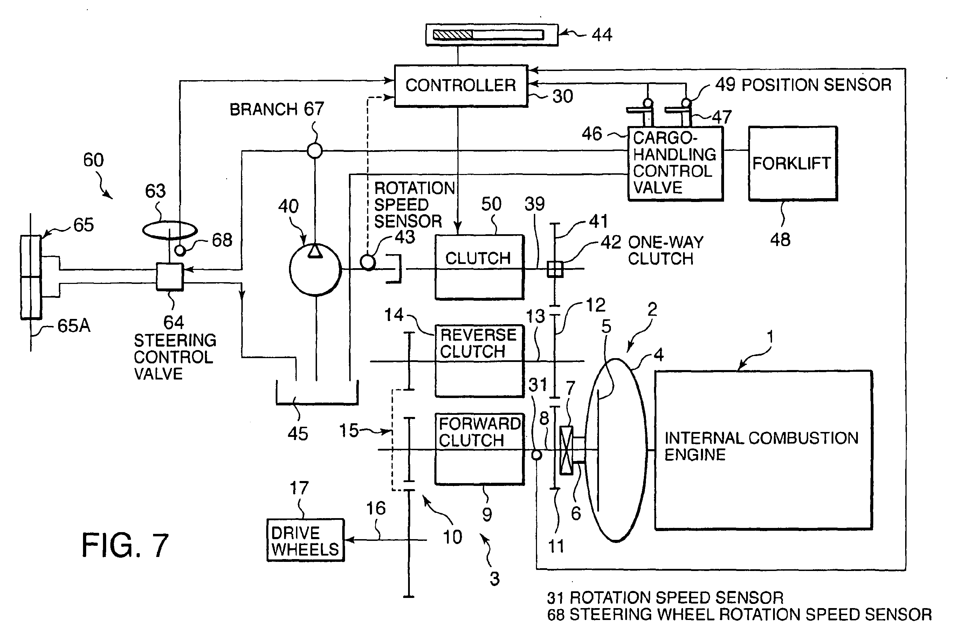

Referring to FIG. 7, a fourth embodiment of this invention will be described.

A forklift truck according to this embodiment uses the cargo-handling pump 40 as a hydraulic pump for the hydraulic power steering device 60. The forklift-driving device is identical to that of the third embodiment. The hydraulic power steering device 60 comprises a steering wheel 63, a steering control valve 64, and a steering cylinder 65 as in the case of the third embodiment. A steering wheel rotation speed sensor 68 is further attached to the steering wheel 63. The steering wheel rotation speed sensor 68 detects a rotation speed of the steering wheel 63 and inputs it into the controller 30 via a signal circuit.

In this embodiment, the oil discharged from the cargo-handling pump 40 bifurcates to the cargo-handling control valve 46 and the hydraulic power steering device 60 via a branch 67.

The controller 30 engages the clutch 50 to supply the pressurized working oil discharged from the cargo-handling pump 40 to the hydraulic power steering device 60 when the steering wheel rotation speed is equal to or higher than a predetermined speed.

The controller 30 also engages the clutch 50 to supply the pressurized oil discharged from the cargo-handling pump 40 to both the hydraulic power steering device 60 and the cargo-handling control valve 46 when the cargo-handling control lever 47 is in the cargo-handling position corresponding to the signal input from the position sensor 49 and the steering wheel rotation speed is equal to or higher than a predetermined speed.

When, on the other hand, the rotation speed of the turbine shaft 8 input from the rotation speed sensor 31 is equal to or lower than a predetermined rotation speed, the controller 30 reduces the engaging pressure of the forward clutch 9 or the reverse clutch 14 under engagement from a predetermined engaging pressure.

In this embodiment, the cargo-handling pump 40 also serves as a hydraulic pump for driving the hydraulic power steering device 60. When the steering wheel 63 is operated in a state where the rotation speed of the turbine shaft 8 is low, the cargo-handling pump 40 may not provide sufficient working oil for a steering action. The operator may then feel that the steering operation is heavy.

This situation, in which the rotation speed of the turbine shaft 8 becomes so low that the operator feels discomfort during steering, corresponds to a case in which the forklift truck is subject to braking not by depression of the inching pedal but by depression of the brake pedal 25 such that the forklift truck runs at an extremely low speed close to stopping or is stationary.

In this state, since the rotation speed of the turbine shaft 8 is lower than an output rotation speed of the internal combustion engine 1 running idle, the turbine shaft 8 increases the rotation speed, when the engaging pressure of the forward clutch 9 or the reverse clutch 14 under engagement is reduced. In this speed region, since the rotation speed of the turbine shaft 8 is lower than the output rotation speed of the internal combustion engine 1, engine braking is not applied.

When the rotation speed of the turbine shaft 8 is equal to or higher than the predetermined speed, the controller 30 reduces the engaging pressure of the forward clutch 9 or the reverse clutch 14 under engagement to increase the rotation speed of the turbine shaft 8. Reducing the engaging pressure of the forward clutch 9 or the reverse clutch 14 under engagement in this speed region is also preferable in terms of decreasing the fuel consumption and engine load, and cooling the working oil.

The engaging pressure of the forward clutch 9 and the reverse clutch 14 is electronically controlled via the electromagnetic proportional pressure control valves 21 and 22, respectively, and the controller 30 can easily reduce the engaging pressure by outputting a corresponding command signal to the drive circuit 23 or 24.

According to this embodiment, the following effects are obtained in addition to those of the first embodiment.

Since the forklift truck according to this embodiment drives the cargo-handling pump 40 only when it is required to be operative, the energy consumption of the cargo-handling pump 40 can be suppressed and temperature increases in the pressurized working oil discharged from the cargo-handling pump 40 are further prevented.

The cargo-handling pump 40 also serves as a hydraulic pump for driving the hydraulic power steering device 60, whereby the constitution of hydraulic equipment of the forklift truck is simplified. Further, a minimum discharge amount of the cargo-handling pump 40 is ensured at an extremely low speed running.

Although the invention has been described above with reference to certain embodiments, the invention is not limited to the embodiments described above. Modifications and variations of the embodiments described above will occur to those skilled in the art, within the scope of the claims.

## Claims

1. An industrial vehicle comprising:
an internal combustion engine (1);
a torque converter (2) comprising a pump impeller (4) connected to the internal combustion engine (1) and a turbine runner (5);
an automatic transmission (3) connected to the turbine runner (5);
a drive wheel (17) connected to the automatic transmission (3); and
an equipment-driving pump (40) driven by a rotational torque of the turbine runner (5);
**characterized by**
a one-way clutch (42) which transmits the rotational toque of the turbine runner (5) to the equipment-driving pump (40) when the turbine runner (5) rotates in an identical direction as the pump impeller (4) while preventing the rotational toque of the turbine runner (5) from being transmitted to the equipment-driving pump (40) when the turbine runner (5) rotates in an opposite direction to the pump impeller (4).

2. The industrial vehicle as defined in Claim 1, wherein the automatic transmission (3) comprises a drive gear (11) connected to the turbine runner (5), a forward clutch (9) which connects the drive gear (11) and the drive wheel (17) when engaged while disconnecting the drive gear (11) and the drive wheel (17) when released, a driven gear (12) meshed with the drive gear (11), and a reverse clutch (14) which connects the driven gear (12) and the drive wheel (17) when engaged while disconnecting the driven gear (12) and the drive wheel (17) when released, and the industrial vehicle further comprises a pump-driving gear (41) which is meshed with the driven gear (12) to drive the equipment-driving pump (40).

3. The industrial vehicle as defined in Claim 2, further comprising a clutch (50) which connects the pump-driving gear (41) and the equipment-driving pump (40) when engaged while disconnecting the pump-driving gear (41) and the equipment-driving pump (40) when released.

4. The industrial vehicle as defined in Claim 2 or Claim 3, further comprising a hydraulic power steering device (60) which operates using oil discharged by the equipment-driving pump (40), and a control device configured to reduce an engaging pressure of the forward clutch (9) or the reverse clutch (14) under engagement when a rotation speed of the turbine runner (5) is equal to or lower than a predetermined rotation speed .

5. The industrial vehicle as defined in any one of Claim 2 through Claim 4, further comprising a charge pump (7) which is connected to the pump impeller (4) to supply the forward clutch (9) and the reverse clutch (14) with hydraulic pressure for engagement.

6. The industrial vehicle as defined in any one of Claim 1 through Claim 5, further comprising a cargo-handling device (48) which operates using the oil discharged by the equipment-driving pump (40).

7. The industrial vehicle as defined in any one of Claim 1 through Claim 6, further comprising a display device (44A, 44B) which displays information corresponding to a rotation speed of the equipment-driving pump (40).

8. The industrial vehicle as defined in any one of Claim 1 through Claim 7, further comprising a booster pump (53) which operates together with the equipment-driving pump (40), and a hydraulic brake-boosting device (55) which assists braking of the vehicle using oil discharged by the booster pump (53).

9. The industrial vehicle as defined in any one of Claim 1 through Claim 7, further comprising a hydraulic pump (61) which is driven directly by the internal combustion engine (1), and a hydraulic brake-boosting device (55) and a hydraulic power steering device (60), both of which operate using oil discharged by the hydraulic pump (61).

## Patentansprüche

1. Industriefahrzeug, umfassend:
einen Verbrennungsmotor (1);
einen Drehmomentwandler (2) mit einem Pumpenflügelrad (4), das mit dem Verbrennungsmotor (1) und einem Turbinenlaufrad (5) verbunden ist;
ein Automatikgetriebe (3), das mit dem Turbinenlaufrad (5) verbunden ist;
ein Antriebsrad (17), das mit dem Automatikgetriebe (3) verbunden ist; und
eine Geräteantriebspumpe (40), die durch ein Drehmoment des Turbinenlaufrads (5) angetrieben wird;
**gekennzeichnet durch**
eine Einwegkupplung (42), die das Drehmoment des Turbinenlaufrads (5) zur Geräteantriebspumpe (40) überträgt, wenn das Turbinenlaufrad (5) in einer gleichen Richtung wie das Pumpenflügelrad (4) dreht, während sie verhindert, dass das Drehmoment des Turbinenlaufrads (5) zur Geräteantriebspumpe (40) übertragen wird, wenn das Turbinenlaufrad (5) in einer entgegengesetzten Richtung zum Pumpenflügelrad (4) dreht.

2. Industriefahrzeug nach Anspruch 1, wobei das Automatikgetriebe (3) umfasst:
ein Antriebszahnrad (11), das mit dem Turbinenlaufrad (5) verbunden ist,
eine Vorwärtskupplung (9), die das Antriebszahnrad (11) und das Antriebsrad (17) verbindet, wenn sie eingerückt ist, während sie das Antriebszahnrad (11) und das Antriebsrad (17) trennt, wenn sie ausgerückt ist,
ein angetriebenes Zahnrad (12), das mit dem Antriebszahnrad (11) in Eingriff kommt, und
eine Rückwärtskupplung (14), die das angetriebene Zahnrad (12) und das Antriebsrad (17) verbindet, wenn sie eingerückt ist, während sie das angetriebene Zahnrad (12) und das Antriebsrad (17) trennt, wenn sie ausgerückt ist,
und das Industriefahrzeug ferner ein Pumpenantriebszahnrad (41) umfasst, das mit dem angetriebenen Zahnrad (12) in Eingriff kommt, um die Geräteantriebspumpe (40) anzutreiben.

3. Industriefahrzeug nach Anspruch 2, ferner umfassend eine Kupplung (50), die das Pumpenantriebszahnrad (41) und die Geräteantriebspumpe (40) verbindet, wenn sie eingerückt ist, während sie das Pumpenantriebszahnrad (41) und die Geräteantriebspumpe (40) trennt, wenn sie ausgerückt ist.

4. lndustriefahrzeug nach Anspruch 2 oder Anspruch 3, ferner umfassend eine hydraulische Servolenkvorrichtung (60), die mittels Verwendung von Öl, das von der Geräteantriebspumpe (40) ausgegeben wird, funktioniert, und eine Steuervorrichtung, die einen Eingriffsdruck der Vorwärtskupplung (9) oder der Rückwärtskupplung (14) im Eingriff verringert, wenn eine Drehzahl des Turbinenlaufrads (5) gleich oder geringer als eine vorbestimmte Drehzahl ist.

5. Industriefahrzeug nach einem der Anspräche 2 bis 4, ferner umfassend eine Ladepumpe (7), die mit dem Pumpenflügelrad (4) verbunden ist, um einen Hydraulikdruck für einen Eingriff zur Vorwärtskupplung (9) und zur Rückwärtskupplung (14) zuzuführen.

6. Industriefahrzeug nach einem der Ansprüche 1 bis 5, ferner umfassend eine Frachtgut-Handhabungsvorrichtung (48), die mittels Verwendung des Öls, das von der Geräteantriebspumpe (40) ausgegeben wird, funktioniert.

7. Industriefahrzeug nach einem der Ansprüche 1 bis 6, ferner umfassend eine Anzeigevorrichtung (44A, 44B), die Informationen in Bezug auf eine Drehzahl der Geräteantriebspumpe (40) anzeigt.

8. Industriefahrzeug nach einem der Ansprüche 1 bis 7, ferner umfassend eine Drucksteigerungspumpe (53), die mit der Geräteantriebspumpe (40) zusammenarbeitet, und eine hydraulische Bremsverstärkungsvorrichtung (55), die mittels Verwendung von Öl, das von der Drucksteigerungspumpe (53) ausgegeben wird, das Bremsen des Fahrzeugs unterstützt.

9. Industriefahrzeug nach einem der Ansprüche 1 bis 7, ferner umfassend eine Hydraulikpumpe (61), die direkt vom Verbrennungsmotor (1) angetrieben wird, und eine hydraulische Bremsverstärkungsvorrichtung (55) und eine hydraulische Servolenkvorrichtung (60), die beide mittels Öl, das von der Hydraulikpumpe (61) ausgegeben wird, funktionieren.

## Revendications

1. Véhicule industriel comprenant :
un moteur à combustion interne (1) ;
un convertisseur de couple (2) comprenant une turbine de pompe (4) raccordée au moteur à combustion interne (1) et une roue de turbine (5) ;
une transmission automatique (3) raccordée à la roue de turbine (5) ;
une roue d'entraînement (17) raccordée à la transmission automatique (3) ; et
une pompe d'entraînement d'équipement (40) entraînée par un couple de rotation de la roue de turbine (5) ;
**caractérisé par** :
un embrayage unidirectionnel (42) qui transmet le couple de rotation de la roue de turbine (5) à la pompe d'entraînement d'équipement (40) lorsque la roue de turbine (5) tourne dans le même sens que la turbine de pompe (4) tout en empêchant la transmission du couple de rotation de la roue de turbine (5) à la pompe d'entraînement d'équipement (40) lorsque la roue de turbine (5) tourne dans le sens opposé à la turbine de pompe (4).

2. Véhicule industriel selon la revendication 1, dans lequel la transmission automatique (3) comprend un engrenage d'entraînement (11) raccordé à la roue de turbine (5), un embrayage de marche avant (9) qui raccorde l'engrenage d'entraînement (11) et la roue d'entraînement (17) lorsqu'il est mis en prise tout en déconnectant l'engrenage d'entraînement (11) et la roue d'entraînement (17) lorsqu'il est relâché, un engrenage entraîné (12) engrené avec l'engrenage d'entraînement (11), et un embrayage de marche arrière (14) qui raccorde l'engrenage entraîné (12) et la roue d'entraînement (17) lorsqu'il est mis en prise tout en déconnectant l'engrenage entraîné (12) et la roue d'entraînement (17) lorsqu'il est relâché, et le véhicule industriel comprend en outre un engrenage d'entraînement de pompe (41) qui est engrené avec l'engrenage entraîné (12) pour entraîner la pompe d'entraînement d'équipement (40).

3. Véhicule industriel selon la revendication 2, comprenant en outre un embrayage (50) qui raccorde l'engrenage d'entraînement de pompe (41) et la pompe d'entraînement d'équipement (40) lorsqu'il est mis en prise tout en déconnectant l'engrenage d'entraînement de pompe (41) et la pompe d'entraînement d'équipement (40) lorsqu'il est relâché.

4. Véhicule industriel selon la revendication 2 ou la revendication 3, comprenant en outre un dispositif de direction assistée hydraulique (60) qui fonctionne en utilisant de l'huile déchargée par la pompe d'entraînement d'équipement (40), et un dispositif de commande configuré pour réduire une pression de mise en prise de l'embrayage de marche avant (9) ou de l'embrayage de marche arrière (14) sous mise en prise lorsqu'une vitesse de rotation de la roue de turbine (5) est égale ou inférieure à une vitesse de rotation prédéterminée.

5. Véhicule industriel selon l'une quelconque des revendications 2 à 4, comprenant en outre une pompe de charge (7) qui est raccordée à la turbine de pompe (4) pour alimenter l'embrayage de marche avant (9) et l'embrayage de marche arrière (14) avec la pression hydraulique pour la mise en prise.

6. Véhicule industriel selon l'une quelconque des revendications 1 à 5, comprenant en outre un dispositif de manutention embarqué (48) qui fonctionne en utilisant l'huile déchargée par la pompe d'entraînement d'équipement (40).

7. Véhicule industriel selon l'une quelconque des revendications 1 à 6, comprenant en outre un dispositif d'affichage (44A, 44B) qui affiche l'information correspondant à une vitesse de rotation de la pompe d'entraînement d'équipement (40).

8. Véhicule industriel selon l'une quelconque des revendications 1 à 7, comprenant en outre une pompe de surpression (53) qui fonctionne conjointement avec la pompe d'entraînement d'équipement (40), et un dispositif de servofrein hydraulique (55) qui assiste le freinage du véhicule en utilisant l'huile déchargée par la pompe de surpression (53).

9. Véhicule industriel selon l'une quelconque des revendications 1 à 7, comprenant en outre une pompe hydraulique (61) qui est entraînée directement par le moteur à combustion interne (1), et un dispositif de servofrein hydraulique (55) et un dispositif de direction assistée hydraulique (60), dont les deux fonctionnent en utilisant l'huile déchargée par la pompe hydraulique (61).
